# EUROPÄISCHE PATENTSCHRIFT

(11) **EP 3 036 790 B1**
(45) Veröffentlichungstag und Bekanntmachung des Hinweises auf die Patenterteilung: **30.08.2017**
(21) Anmeldenummer: 14793476.4
(22) Anmeldetag: 23.10.2014
(51) Int. Cl.: H01M 10/39, H01M 10/6568, H01M 10/66

(54) **THERMISCHES SPEICHERSYSTEM MIT HOCHTEMPERATURBATTERIE**
THERMAL STORAGE SYSTEM WITH HIGH TEMPERATURE BATTERY
SYSTÈME DE STOCKAGE THERMIQUE AVEC BATTERIE À HAUTE TEMPÉRATURE

(30) Priorität: 30.10.2013 DE 102013222070
(43) Veröffentlichungstag der Anmeldung: 29.06.2016
(73) Patentinhaber: Siemens Aktiengesellschaft, 80333 München (DE)
(72) Erfinder: KÜHNE, Michael, 90762 Fürth (DE); MENAPACE, Wolfgang, 91052 Erlangen (DE); VORTMEYER, Nicolas, 91054 Erlangen (DE)
(86) Internationale Anmeldenummer: PCT/EP2014/072705
(87) Internationale Veröffentlichungsnummer: WO 2015/062949

(56) Entgegenhaltungen:
- DE-A1- 19 547 520
- DE-A1-102011 105 366
- JP-A- H08 138 761
- JP-A- 2013 062 216
- JP-A- 2013 137 152

## Beschreibung

Die vorliegende Erfindung betrifft ein thermisches Speichersystem umfassend eine Hochtemperaturbatterie mit einer Mehrzahl an Speicherzellen, die eine Betriebstemperatur von wenigstens 100 °C aufweisen und die mit einer Wärmetauscherflüssigkeit zur Wärmezu- und Abfuhr in Kontakt sind. Weiter betrifft die Erfindung ein Verfahren zum Betrieb eines solchen thermischen Speichersystems.

Mit dem zunehmendem Ausbau regenerativer Energiequellen zur Bereitstellung von elektrischer Energie wird ein damit einher gehender Zubau an dezentralen Speicherlösungen von verschiedenen technischen Seiten für erforderlich gehalten. Solche Speicher sollen zur Verbesserung der Qualität des mittels der elektrischen Stromversorgungsnetzwerke gelieferten Stroms, wie auch zur Vergleichmäßigung des Stromangebots beitragen. Geeignete Speicher sollen sich insbesondere dazu eignen, ein übermäßiges Angebot an elektrischer Energie in den Stromversorgungsnetzwerken aufzunehmen und zeitlich über Stunden zwischenzuspeichern, um es zu einem späteren Zeitpunkt wieder den Stromversorgungsnetzwerken zuführen zu können, zu welchem ein erhöhter Bedarf besteht.

Ein Einsatz von Hochtemperaturbatterien, die bspw. erfindungsgemäß vorgesehen sind, zeichnen sich durch eine Anzahl an positiven Eigenschaften (hohe Energiespeicherdichten, hohe Zyklenladezahlen, usw.) aus, welche sie für die Speicherung von elektrischer Energie aus Stromversorgungsnetzwerken besonders geeignet machen. Nachteilig bei Hochtemperaturbatterien ist jedoch eine erhöhte Abwärmeproduktion, welche aufgrund der Betriebstemperatur, welche deutlich über dem Umgebungstemperaturniveau liegt, zu starken exergetischen Wärmeverlusten beiträgt. Gleichzeitig müssen Hochtemperaturbatterien jedoch auf einem hohen Betriebstemperaturniveau gehalten werden, um überhaupt eine Betriebsbereitschaft gewährleisten zu können. Hierbei ist es insbesondere erforderlich, Schwankungen in der Betriebstemperatur weitgehend zu vermeiden, um etwa einen schädlichen Einfluss auf die Batterie- und Betriebseigenschaften zu vermeiden. So können etwa Temperaturschwankungen nicht nur permanente chemische Veränderungen in den Speicherzellen der Hochtemperaturbatterie verursachen, was eine verminderte Betriebsbereitschaft zur Folge hat, sondern Temperaturschwankungen können beispielsweise auch zu Schädigungen an Funktionsbauteilen führen, etwa Spannungsrissen in einem Ionen leitenden Separator (Elektrolyten), welche im schlimmsten Fall mit der Zerstörung einer Speicherzelle der Hochtemperaturbatterie einhergehen können.

Herkömmliche thermische Speichersysteme nutzen zur Herbeiführung eines Temperaturausgleichs einen meist konvektiv angetriebenen Wärmeaustausch mit der Umgebung. So werden bspw. die Speicherzellen solcher Hochtemperaturbatterien von Luft umgeben, um so einen geeigneten Wärmeaustausch mit der Umgebung gewährleisten zu können. Um eine verbesserte Temperierung der Speicherzellen zu erreichen, kann etwa die Luft auch durch ein Gebläse mit einer Strömung beaufschlagt werden, um so gezielter Wärme an die Hochtemperaturbatterie zu- bzw. von dieser abführen zu können. Da die Wärmezufuhr mittels erhitzter Luft an die Speicherzellen einer Hochtemperaturbatterie meist aufgrund einer mangelnden Wärmeübertragungsleistung nur unzureichend möglich ist, werden in Hochtemperaturbatterien mitunter auch geeignete Heizvorrichtungen integriert, um diese etwa auf einer geeigneten Betriebstemperatur halten zu können. Bei erforderlicher Wärmeabfuhr hingegen, kann eine konvektive Wärmeübertragung an die Umgebung mittels Luft bei geringen Betriebstemperaturen grundsätzlich möglich sein. Dennoch zeigt es sich bei diesen Temperaturen auch, dass durch die dennoch hohen abzuführenden Wärmemengen, die mitunter stark variieren, weiterhin starke Temperaturschwankungen auftreten können.

Darüber hinaus zeigt es sich als nachteilig, dass die derart abgeführte thermische Energie für weitere Prozesse im Normalfall verloren geht. So wird beispielsweise die der Umgebungsluft übertragene Wärme nicht weiter zur Nutzung vorgesehen, wodurch die Gesamteffizienz bei Betrieb der Hochtemperaturbatterie unvorteilhaft wird. Selbst wenn jedoch diese Wärme für weitere Nutzungen vorgesehen werden könnte, zeigt es sich, dass der Zeitpunkt des Wärmeanfalls im Normalfall nicht mit dem Zeitpunkt übereinstimmt, zu welchem beispielsweise die angefallene Wärme als Nutzwärme nachgefragt werden könnte. So erzeugen beispielsweise Hochtemperaturbatterien, die auf der Technologie der Natrium-Nickel-Chlorid-Zellen (NaNiCl₂-Zellen) basieren, insbesondere zu Zeiten der Entladung thermische Energie. Die Entladung der Hochtemperaturbatterien erfolgt jedoch typischerweise nur über einen Zeitraum von einigen Minuten bis zu wenigen Stunden. Eine kontinuierliche Wärmeversorgung direkt aus dieser Wärmequelle ist also nicht möglich, vor allem dann nicht, wenn thermische Energie verstärkt nachgefragt wird. Diese Nachfrage nach Wärme mag sich im Laufe eines Tages, wie auch im saisonalen Querschnitt ändern, jedoch ist diese weitgehend unabhängig von der Nachfrage nach elektrischer Energie aus den elektrischen Stromversorgungsnetzwerken.

Die der vorliegenden Erfindung zugrunde liegenden Aufgaben sollen also darin bestehen, die aus dem Stand der Technik bekannten Nachteile zu vermeiden. Insbesondere stellt es sich als technisch wünschenswert dar, bei Betrieb eines thermischen Speichersystems eine deutliche Effizienzverbesserung zu erreichen. Hierbei soll die Effizienzverbesserung bevorzugt den Gesamtbetrieb der Hochtemperaturbatterie, also sowohl den Lade- wie auch den Entladevorgang betreffen. Weiter soll die vorliegende Erfindung ermöglichen, die aus dem Stand der Technik bekannten Nachteile hinsichtlich der Wärmezufuhr an, wie auch -abfuhr von der Hochtemperaturbatterie zu vermeiden. Weiterhin ist es wünschenswert, eine weigehende Konstanz der Betriebstemperatur der Hochtemperaturbatterie zu sichern, so dass die Hochtemperaturbatterie in einem Temperaturband mit verhältnismäßig geringer Breite bzw. Schwankung sicher betrieben werden kann. Eine typische Schwankungsbreite liegt hierbei etwa bei 20°C, bevorzugt bei ca. 10°C. Damit kann nicht nur die Betriebseffizienz verbessert, sondern auch die Störungs- und Wartungsanfälligkeit der Speicherzellen der Hochtemperaturbatterie vorteilhaft beeinflusst werden.

Erfindungsgemäß werden diese zugrunde liegenden Aufgaben gelöst durch ein thermisches Speichersystem gemäß Anspruch 1 sowie durch ein Verfahren zum Betrieb eines solchen, nachfolgend beschriebenen Speichersystems gemäß Anspruch 8 gelöst.

Insbesondere werden die der Erfindung zugrunde liegenden Aufgaben gelöst durch ein thermisches Speichersystem, umfassend eine Hochtemperaturbatterie mit einer Mehrzahl an Speicherzellen, die eine Betriebstemperatur von wenigstens 100 °C aufweisen, und die mit einer Wärmetauscherflüssigkeit zur Wärmezu- und Abfuhr in Kontakt sind, wobei weiterhin ein erster Wärmespeicher mit einem Wärmespeicherfluid umfasst ist, welcher mit der Hochtemperaturbatterie derart wärmetechnisch verschaltet ist, dass Wärme von der Hochtemperaturbatterie auf das Wärmespeicherfluid übertragen werden kann, und wobei der Wärmespeicher selbst mit einem Niedertemperaturwärmespeicher wärmetechnisch zur Wärmeübertragung verschaltet ist, welcher zur Speicherung von Niedertemperaturwärme auf einem Temperaturniveau von wenigstens 40 °C vorgesehen ist.

Weiter werden die der Erfindung zugrunde liegenden Aufgaben, insbesondere gelöst durch ein Verfahren zum Betrieb eines solchen vorab, wie auch nachfolgend beschriebenen thermischen Speichersystems, welches folgende Schritte umfasst:
- Betreiben der Hochtemperaturbatterie unter Wärmeerzeugung;
- Übertragen wenigstens eines Teils dieser Wärme auf die Wärmetauscherflüssigkeit;
- Speichern wenigstens eines Teils dieser Wärme mittels eines Wärmespeicherfluids in einem Wärmespeicher;
- Übertragen wenigstens eines Teils dieser Wärme auf den Niedertemperaturwärmespeicher.

Die erfindungsgemäße Hochtemperaturbatterie umfasst typischerweise eine Mehrzahl an Speicherzellen, welche in einem gemeinsamen Gehäuse zu einer Hochtemperaturbatterie miteinander elektrisch verschaltet sind. Die Speicherzellen der Hochtemperaturbatterie befinden sich mit der Wärmetauscherflüssigkeit in thermischem Kontakt, welche für eine Wärmezu- bzw. abfuhr sorgt. Die Speicherzellen weisen eine vorbestimmte Betriebstemperatur auf, welche wenigstens 100 °C beträgt. Ausführungsgemäß weisen die Hochtemperaturbatterien auch eine maximale Betriebstemperatur von etwa 500 °C auf. Demgemäß betreffen die erfindungsgemäßen Hochtemperaturbatterien insbesondere die Technologie der Natrium-Nickel-Chlorid-Zellen, wie auch der Natrium-Schwefel-Zellen (NaS-Zellen), sowie alle damit verwandten Speichertechnologien.

Je nach Betriebsweise können die Speicherzellen Wärme abgeben, bzw. müssen bspw. zum Erreichen einer Betriebstemperatur mit Wärme versorgt werden. So müssen etwa Hochtemperaturbatterien, die auf der Technologie der Natrium-Nickel-Chlorid-Zellen basieren, wenigstens ein Temperaturniveau von etwa 250°C erreichen, um den Temperatur abhängigen, internen Zellenwiderstand ausreichend klein zu gestalten. Erst bei Erreichen eines ausreichend hohen Temperaturniveaus werden nämlich die von den Speicherzellen umfassten Separatoren (typischerweise Festkörperseparatoren) ausreichend stark Ionen leitfähig, so dass zelleninterne Ionenflüsse einen Batteriebetrieb ermöglichen.

An dieser Stelle soll darauf hingewiesen werden, dass die erfindungsgemäße Wärmeversorgung der Hochtemperaturbatterie, sowohl die Versorgung mit thermischer Energie von der Wärmetauscherflüssigkeit auf die Speicherzellen, als auch die Übertragung von thermischer Energie von den Speicherzellen auf die Wärmetauscherflüssigkeit umfasst. Wärme ist also vorliegend in seiner allgemeinen Form zu verstehen. So kann der Begriff Wärme also sowohl die positive thermische Energie genauso wie negative thermische Energie (Kälte) umfassen.

Aufgrund der erfindungsgemäßen Auskopplung von Wärme aus den Speicherzellen der Hochtemperaturbatterie mittels der Wärmetauscherflüssigkeit und der nachfolgenden Übertragung dieser Wärme auf den Niedertemperaturwärmespeicher kann die Wärme für alle Formen der Niedertemperaturwärmenutzung geeignet erreicht werden. Insbesondere eignet sich diese Wärme für die häusliche, bzw. auch industrielle Brauchwasserzubereitung, für die Gebäudeheizung, für eine Fahrgastraumerwärmung für den Personentransport, zur Brennstofferwärmung oder Brennstofftrocknung etwa bei Kraftwerken oder auch zur Warmhaltung bei Dieselaggregaten, usw..

An dieser Stelle sei auch ausdrücklich darauf hingewiesen, dass der Begriff der Niedertemperaturwärme eine Wärme auf einem Temperaturniveau zwischen 40 °C und 200 °C betrifft. Wärme auf diesem Temperaturniveau ist besonders geeignet, in Anwendungen zur Kraft-Wärme-Kopplung genutzt zu werden. Aufgrund dieser weitergehenden Nutzung steigt der Gesamtwirkungsgrad des thermischen Speichersystems.

Der Niedertemperaturwärmespeicher erlaubt also keine Speicherung von Wärme auf einem Temperaturniveau von mehr als 200°C, wodurch auch die exergetischen Wärmeverluste an die Umwelt vorteilhaft gering gehalten werden können. Insbesondere bei Temperaturspeichern auf Temperaturen die höher als 200 °C sind, ist nämlich mit hohen Wärmeverlusten an die Umgebung zu rechnen, die den Gesamtwirkungsgrad des thermischen Speichersystems negativ beeinträchtigen könnten.

Der unmittelbare Wärmeaustausch zwischen Hochtemperaturbatterie und Wärmetauscherflüssigkeit weist zudem den Vorteil auf, Temperaturschwankungen auf einem Betriebstemperaturniveau der Hochtemperaturbatterie besser ausgleichen zu können, da eine solche Flüssigkeit im Vergleich zu einem Gas eine erhöhte Wärmekapazität und verbesserte Wärmeleitung aufweist. So kann beispielsweise eine Wärmetauscherflüssigkeit von der Hochtemperaturbatterie bei Wärmespitzen ohne Weiteres kurzzeitig auch vermehrt Wärme abführen und in der Wärmetauscherflüssigkeit aufnehmen, als dies etwa für ein Gas möglich wäre. Durch die Übertragung der so aufgenommenen Wärme weiter an das Wärmespeicherfluid kann ein geeignetes Betriebstemperaturniveau innerhalb eines vorgegebenen Temperaturbandes kontrolliert eingestellt werden. In anderen Worten ist die Temperaturverteilung in der Hochtemperaturbatterie verbessert gleichmäßig. Die Einstellung kann gesteuert bzw. geregelt erfolgen. Die bei Betrieb der Hochtemperaturbatterie frei werdende Wärme wird also zeitweise in dem Wärmespeicher mittels des Wärmespeicherfluids bevorratet, bevor diese Wärme wiederum durch geeignete Auskopplung an den Niedertemperaturwärmespeicher überführt wird. Diese Überführung erreicht eine vorteilhafte Nutzbarmachung der von der Hochtemperaturbatterie entnommenen Wärme. Durch die Zwischenspeicherung der Wärme in dem Niedertemperaturwärmespeicher kann auch die Wärme zu Zeitpunkten entnommen werden, zu welchen eine erhöhte Anfrage nach Wärme besteht, ohne hingegen den Betriebszustand der Hochtemperaturbatterie zu ändern.

Ausführungsgemäß kann die Wärmeübertragung von der Hochtemperaturbatterie auf das Wärmespeicherfluid direkt erfolgen. Demgemäß ist etwa die Wärmetauscherflüssigkeit identisch mit dem Wärmespeicherfluid. Ebenso kann die Wärmeübertragung aber auch indirekt erfolgen, so dass etwa das Wärmespeicherfluid mit der Wärmetauscherflüssigkeit identisch sein kann, dies jedoch nicht sein muss. So ist es beispielsweise denkbar, dass die Hochtemperaturbatterie über einen geeigneten Wärmetauscher mit dem Wärmespeicher derart wärmetechnisch verbunden ist, dass eine Wärmeübertragung zwischen Wärmetauscherflüssigkeit und Wärmespeicherfluid gewährleistet werden kann. Gemäß anderen alternativen Ausführungsformen ist es jedoch auch möglich, dass die Wärmetauscherflüssigkeit von der Hochtemperaturbatterie an den Wärmespeicher geführt wird und dort zwischengespeichert wird.

Durch die Wärmeübertragung mittels einer Wärmetauscherflüssigkeit kann die Wärmemenge in der Hochtemperaturbatterie auf verhältnismäßig engem Raum gespeichert werden. Dies ermöglicht auch die Ausbildung von kleineren thermischen Speichersystemen, welche etwa in Modulbauweise ausgeführt sein können. Gleichzeitig kann die Wärme auch über geeignete Rohrleitungen ausreichend schnell auch über mittlere Entfernungen (bis etwa zu hundert Meter) transportiert werden. Damit kann auch eine räumliche Trennung von Hochtemperaturbatterie und Wärmespeicher erreicht werden. Insbesondere ist es denkbar, dass eine Mehrzahl an Hochtemperaturbatterien mit einem Wärmespeicher verbunden sind. Dieser Wärmespeicher kann von den Hochtemperaturbatterien in sicherer Entfernung vorgesehen sein.

Eine noch größere räumliche Trennung ist insbesondere durch die Verwendung des Niedertemperaturwärmespeichers möglich, der eine wärmetechnische Kopplung mit dem Wärmespeicher aufweist. Hierbei kann etwa aus dem Wärmespeicher über mehrere Kilometer Wärme an einen Ort transportiert werden, an welchem eine erhöhte Wärmenachfrage besteht. Diese Wärmenachfrage kann also an einem von der Hochtemperaturbatterie räumlich entfernten Ort bedient werden. Damit zeigt sich das thermische Speichersystem als besonders flexibel, wie auch energieeffizient. Der Gesamtwirkungsgrad des thermischen Speichersystems kann damit vorteilhaft verbessert werden.

Zudem ermöglicht die Wärmeübertragung auf die Wärmetauscherflüssigkeit einen schonenden Betrieb der Hochtemperaturbatterie, da die Speicherzellen lediglich nur geringen Temperaturschwankungen ausgesetzt sein müssen und somit die durchschnittlich zu erwartende Lebensdauer der Speicherzellen vorteilhaft verbessert ist. Gleichzeitig ist damit zu rechnen, dass die Wartungsanfälligkeit ebenfalls vermindert wird.

Durch die wärmetechnische Verschaltung des Niedertemperaturwärmespeichers mit dem Wärmespeicher kann zudem weiterhin im normalen Betrieb der Hochtemperaturbatterie ausgeschlossen werden, dass schädigende Temperaturspitzen in der Hochtemperaturbatterie auftreten. Durch die Wärmeabfuhr aus dem Wärmespeicher an den Niedertemperaturwärmespeicher kann nämlich im Normalfall stets soviel Wärme abgeführt werden, dass der Wärmespeicher auf einem vorteilhaften Temperaturniveau gehalten werden kann. Der Niedertemperaturwärmespeicher dient also der vorteilhaften Temperierung des Wärmespeichers und damit indirekt der Temperierung der Hochtemperaturbatterie. Da der Niedertemperaturwärmespeicher typischerweise eine deutlich größere Wärmekapazität aufweist, als der Wärmespeicher bzw. das Wärmespeicherfluid selbst, kann so das Temperaturniveau in dem Wärmespeicher durch eine kontrollierte gesteuerte bzw. geregelte Wärmeübertragung zwischen Wärmespeicher und Niedertemperaturwärmespeicher in dem Wärmespeicher gleichmäßig konstant gehalten werden. Somit kann die Hochtemperaturbatterie bspw. auch auf weitere Wärmetauscher verzichten, welche etwa bei Auftreten von Temperaturspitzen zur vermehrten Wärmeabfuhr eingesetzt werden müssten.

Andererseits ermöglicht der Wärmespeicher selbst auch über einzelne Betriebsintervalle der Hochtemperaturbatterie ausreichend Wärme zu speichern, um diese auch nach einigen Stunden mit so viel Wärme zu versorgen, dass eine geeignete Betriebstemperatur gehalten werden kann.

Ebenso kann, wie weiter unten noch erklärt werden wird, der Wärmespeicher auch die Aufgabe eines Ausdehnungsgefäßes erfüllen, wodurch auch die Ausbildung eines geschlossenen Wärmefluidleitungssystems ermöglicht wird.

Erfindungsgemäß ermöglicht also die wärmetechnische Kopplung zweier Speicher (Wärmespeicher und Niedertemperaturwärmespeicher), gleichzeitig eine vorteilhafte Temperierung der Hochtemperaturbatterie auf einem hohen Temperaturniveau unter gleichzeitiger Nutzung der Abwärme in einem Niedertemperaturbereich.

Gemäß einer ersten besonders bevorzugten Ausführungsform des thermischen Speichersystems ist vorgesehen, dass die Wärmetauscherflüssigkeit in einem geschlossenen Wärmefluidleitungssystem bevorratet wird, welches in Bezug auf einen Fluidaustausch gegen die Umgebung abgeschlossen ist. Ausführungsgemäß umfasst das Wärmefluidleitungssystem neben den erforderlichen Leitungen auch die Speicherbehältnisse und Behältnisse zu Bevorratung des oder der Fluide. Insofern kann der Wärmespeicher auch Teil des Wärmefluidleitungssystems sein. Das Wärmefluidleitungssystem weist jedoch eine gemeinschaftliche Fluidführung auf, d. h. in dem Wärmefluidleitungssystem befindet sich lediglich ein Wärmefluid zur Wärmeleitung. Eine geschlossene Wärmefluidführung erlaubt die Ausbildung eines besonders leistungseffizienten Systems. Zudem zeichnen sich derartige Systeme durch verhältnismäßig geringe exergetische Wärmeverluste aus, wobei zusätzlich auch wenig Gefahrenstoffe bzw. Giftstoffe in die Umwelt entlassen werden. Insbesondere bei Verwendung von Thermoölen bzw. Schwerölen als Wärmetauscherflüssigkeit kann so ein stärker umweltverträgliches Speichersystem bereit gestellt werden. Weiterhin sind geschlossene Wärmefluidleitungssysteme gegen mechanische Einwirkungen von außen, insbesondere im Bezug auf Schwingungseinkopplungen, weniger anfällig als offene Systeme.

Gemäß einer weiteren bevorzugten Ausführungsform des thermischen Speichersystems ist vorgesehen, dass die Wärmetauscherflüssigkeit und das Wärmespeicherfluid identisch sind und sich bevorzugt in einem Wärmefluidleitungssystem befinden. Ausführungsgemäß können also Wärmetauscherverluste zwischen der Wärmetauscherflüssigkeit und dem Wärmespeicherfluid vermieden werden. Zudem erweist sich ein derartiges System als besonders effizient in der Wärmeabfuhr und somit bei der Verhinderung von Temperaturspitzen während des Betriebs der Hochtemperaturbatterie.

Ein weiterer vorteilhafter Aspekt einer Ausführungsform des thermischen Speichersystems besteht darin, dass der Wärmespeicher eine elektrische Heizvorrichtung aufweist, welche dazu ausgebildet ist, bei Betrieb Wärme auf das Wärmespeicherfluid zu übertragen. So kann ausführungsgemäß darauf verzichtet werden, die Hochtemperaturbatterie selbst mit einer Heizvorrichtung zu bestücken, was mitunter einen erhöhten bautechnischen Aufwand bzw. Temperaturmanagement bedeuten kann. Vielmehr reicht es ausführungsgemäß aus, die Wärme von dem erwärmten Wärmespeicherfluid auf die Wärmetauscherflüssigkeit zu übertragen, um damit die Speicherzellen der Hochtemperaturbatterie mit ausreichend Wärme zu versorgen. Vor allem während eines Stand-By-Betriebs zur Beibehaltung einer Mindestbetriebstemperatur bzw. im Anfahrbetrieb, während dessen die Hochtemperaturbatterie vermehrt mit Wärme beliefert werden muss, eignet sich eine solche Ausführungsform. Besonders energetisch vorteilhaft ist diese Ausführungsform, wenn mit einem Wärmespeicher mehrere Hochtemperaturbatterien verschaltet sind, so dass über eine zentrale Wärmequelle, dem Wärmespeicher, eine Mehrzahl an Hochtemperaturbatterien mit ausreichend Wärme versorgt werden können.

Gemäß einer weiteren vorteilhaften Ausführungsform der Erfindung ist vorgesehen, dass der Wärmespeicher ein Ausgleichsgefäß aufweist, welches mit dem Wärmespeicher fluidtechnisch verschaltet ist und welches bei Betrieb der Hochtemperaturbatterie Wärmespeicherfluid auf einem geringerem Temperaturniveau umfasst, als in dem Wärmespeicher selbst. Das Ausgleichsgefäß dient insbesondere zu einem Volumenausgleich bei Temperaturschwankungen. Da das Ausgleichsgefäß jedoch Wärmespeicherfluid aufweist, welches hinsichtlich seines Wärmegehalts geringer ist als das Wärmespeicherfluid in dem Wärmespeicher, sind geringere exergetische Wärmeverluste zu befürchten. Da das Wärmespeicherfluid in dem Ausgleichsgefäß jedoch größtenteils nicht an dem Wärmetausch zwischen Wärmespeicherfluid und Wärmetauscherflüssigkeit teilnimmt, muss dessen Inhalt auch nicht auf dem Betriebstemperaturniveau des Wärmespeicherfluids gehalten werden. Ein solches thermisches Speichersystem ist also exergetisch besonders vorteilhaft zu bewerten. Zudem hat ein wesentlich reduziertes Temperaturniveau des Ausgleichsgefäßes den Vorteil, dass die Geschwindigkeit chemischer Reaktionen des Wärmespeicherfluids mit Luftsauerstoff in der Regel vernachlässigbar ist und die Nutzungsdauer des Wärmespeicherfluids damit nicht wesentlich eingeschränkt wird. Aufgrund dieser Tatsache entfällt zumeist auch die Notwendigkeit, das Wärmespeicherfluid mit Inertgas zu überschichten.

Gemäß einer weiterführenden, ebenfalls vorteilhaften Ausführungsform der Erfindung ist vorgesehen, dass der Wärmespeicher ein Ausgleichsgefäß umfasst, welches mit dem Wärmespeicher fluidtechnisch verschaltet, innerhalb der Hochtemperaturbatterie integriert, und gegen Umgebungsluft abgeschlossen ist. Um die bei der Herstellung der Betriebsbereitschaft der Hochtemperaturbatterie stattfindende thermische Ausdehnung des Wärmespeicherfluids auszugleichen, kann das ausführungsgemäße Ausgleichgefäß bevorzugt in mindestens einer der Wandungen der Hochtemperaturbatterie oder in deren inneren Volumenbereich integriert und in Form mindestens eines Metallbalges ausgeführt sein.

Gemäß einer dazu alternativ vorgesehen, ebenfalls vorteilhaften Ausführungsform der Erfindung ist vorgesehen, dass der Wärmespeicher ein Ausgleichsgefäß umfasst, welches mit dem Wärmespeicher fluidtechnisch verschaltet, außerhalb der Hochtemperaturbatterie integriert, und gegen Umgebungsluft abgeschlossen ist. Um die bei der Bereitstellung der Betriebsbereitschaft der Hochtemperaturbatterie stattfindende thermische Ausdehnung des Wärmespeicherfluids auszugleichen, kann das Ausgleichgefäß bevorzugt in Form mindestens eines Metallbalges ausgeführt sein, welcher in räumlicher Nähe zu der Hochtemperaturbatterie und/oder des Wärmespeichers angeordnet ist. Räumliche Nähe bezieht sich hierbei auf eine Anordnung in einer Distanz, die nicht größer ist als eine Distanz, welche der größten Abmessung der Hochtemperaturbatterie oder des Wärmespeichers in einer beliebigen Raumrichtung entspricht.

Gemäß einer weiteren vorteilhaften Ausführungsform des thermischen Speichersystems ist der Niedertemperaturwärmespeicher als Wasserspeicher ausgebildet und die Niedertemperaturwärme wird im Wasser dieses Wasserspeichers bevorratet. Einerseits eignet sich Wasser als kostengünstiger Rohstoff, besonders zu Wärmespeicherung und kann andererseits auch leicht in viele auf Wassergrundlage arbeitenden Wärmekreisläufen im industriellen und im Heimanwendungsbereich integriert werden. Insbesondere kann etwa das Wasser aus dem Wasserspeicher auch in ein Fernwärmenetzwerk eingeleitet werden. Ebenfalls eignet sich das Wasser als aufbereitetes Brauchwasser für Heim- sowie Industrieanwendungen.

Entsprechend einer weiteren Ausführungsform der Erfindung ist vorgesehen, dass die Hochtemperaturbatterie zusammen mit dem Wärmespeicher in einem transportfähigen Modul untergebracht sind, welches einen geeigneten Anschlussbereich zum Anschluss einer Wärmeleitung für einen Niedertemperaturspeicher aufweist. Ausführungsgemäß können eine Mehrzahl an Modulen wärmetechnisch miteinander verschaltet sein, bzw. können jeweils mit einem Niedertemperaturwärmespeicher wärmetechnisch gekoppelt sein, um diesen mit ausreichenden Wärmemengen an thermischer Energie zu versorgen. Die Modularität erlaubt hierbei eine einfache Handhabung und Wartung, ohne auf die direkte wärmetechnische Verschaltung der Hochtemperaturbatterie Einfluss nehmen zu müssen. Ausführungsgemäß ist ein thermisches Speichersystem auch leicht skalierbar, indem etwa mehrere transportfähige Module einfach wärmetechnisch verschaltet werden. Das Wärmemanagement zwischen Hochtemperaturbatterie, Wärmetauscherflüssigkeit, Wärmespeicher und Wärmespeicherfluid kann eine geeignete, fluidtechnische Schaltung übernehmen, die ebenfalls mit von dem Modul umfasst sein kann. Insofern kann das Modul auch geeignete Schnittstellen aufweisen, über welche eine solche Schaltung elektrisch nach außen kommuniziert.

Entsprechend einer weiteren Ausführungsform, kann ein solches Modul, wie vorab beschrieben, auch mit einem geeigneten Strom- und/oder Wärmezähler versehen sein. Dementsprechend kann die Steuerung bzw. Regelung des Moduls auch stromgeführt bzw. wärmegeführt vorgenommen werden.

An dieser Stelle ist darauf hinzuweisen, dass das Modul bereits dann als transportfähig anzusehen ist, wenn es mit Hilfe von mechanischen, elektrischen oder hydraulischen Vorrichtungen kontrolliert bewegt und angeordnet werden kann. Besonders bevorzugt ist jedoch eine Modulgröße, die erlaubt, das Modul lediglich durch menschliche Kraft geeignet und kontrolliert zu bewegen.

Gemäß einer ersten besonders bevorzugten Ausführungsform des erfindungsgemäßen Verfahrens ist vorgesehen, dass der Schritt des Übertragens wenigstens eines Teils der Wärme auf den Niedertemperaturwärmespeicher in Abhängigkeit von dem Temperaturniveau in dem Wärmespeicher erfolgt. Hierzu kann der Wärmespeicher typischerweise wenigstens einen Temperatursensor aufweisen, welcher die Temperatur in dem Wärmespeicher erfasst. Die erfassten Temperaturwerte können anschließend dazu dienen, mittels einer geeigneten Steuerschaltung bzw. Regelschaltung den Wärmeaustausch zwischen Wärmespeicher und Niedertemperaturwärmespeicher einzustellen. Insbesondere können beide durch wenigstens einen Wärmetauscher miteinander verbunden sein.

Ausführungsgemäß können auch Wärmespeicher und Niedertemperaturwärmespeicher über eine Wärmeleitung miteinander verbunden sein, wobei das in dieser Wärmeleitung geführte Leitungsfluid auch mittels eines Strömungsgenerators in der Wärmeleitung umgepumpt werden kann. Die Umpumprate bestimmt hierbei die gewünschte Wärmeübertragungsrate. Diese kann etwa in Abhängigkeit von dem Temperaturniveau in dem Wärmespeicher eingestellt werden. Um die Wärmeübertragungsrate vorteilhaft einzustellen, können auch in der Wärmeleitung geeignete Temperatur- und/oder Drucksensoren vorgesehen sein. Ebenso weist der Niedertemperaturwärmespeicher typischerweise mindestens einen Temperatursensor auf, um auch den Wärmeinhalt in den Niedertemperaturwärmespeicher bestimmen zu können. Ausführungsgemäß kann durch die Einstellung eines geeigneten Wärmeflusses zwischen Wärmespeicher und Niedertemperaturwärmespeicher dem Wärmespeicher immer so viel Wärme entzogen werden, dass dieser in einem vorteilhaften Temperaturniveaubereich betrieben werden kann. Bevorzugt schwankt dieser Temperaturbereich nicht um mehr als 20 ° C, ganz besonders bevorzugt schwankt dieser Temperaturbereich nicht um mehr als 10 °C.

Alternativ oder auch zusätzlich kann der Schritt des Übertragens wenigstens eines Teils dieser Wärme auf den Niedertemperaturwärmespeicher in Abhängigkeit von dem Temperaturniveau in der Hochtemperaturbatterie erfolgen. Wie zur vorhergehenden Ausführungsform bereits ausgeführt, kann so etwa auch bei der vorliegenden Ausführungsform die Umpumprate in der Wärmeleitung zwischen Wärmespeicher und Niedertemperaturwärmespeicher in Abhängigkeit von dem Temperaturniveau in der Hochtemperaturbatterie einstellt werden. Hierzu weist die Hochtemperaturbatterie beispielsweise wenigstens einen bzw. mehrere Temperatursensoren und/Drucksensoren auf. Weiter kann auch der Wärmeaustausch zwischen der Hochtemperaturbatterie und dem Wärmespeicher auf ähnliche Weise geregelt bzw. gesteuert eingestellt werden, so dass eine gezielte Temperatureinstellung der Hochtemperaturbatterie bei Betrieb erfolgen kann.

Entsprechend einer weiteren bevorzugten Ausführungsform des erfindungsgemäßen Verfahrens ist vorgesehen, dass der Schritt des Übertragens, wenigstens eines Teils der Wärme der Hochtemperaturbatterie auf die Wärmetauscherflüssigkeit und/oder der Schritt des Übertragens, wenigstens eines Teils der Wärme in dem Wärmespeicher auf den Niedertemperaturwärmespeicher derart geregelt, bzw. gesteuert erfolgt, dass das Temperaturniveau der Wärmetauscherflüssigkeit bei bestimmungsgemäßem Betrieb der Hochtemperaturbatterie sich innerhalb eines Temperaturbandes mit einer Breite von höchstens 20 °C, bevorzugt von höchstens 10 °C befindet. Demzufolge können die Speicherzellen der Hochtemperaturbatterie vor zu starken Temperaturschwankungen während des Betriebs bewahrt werden, wodurch deren Lebensdauer positiv beeinflusst wird. Insbesondere können Beschädigungen von Speicherzellen durch Temperaturspannungen vorteilhaft vermieden werden.

Nachfolgend soll die Erfindung anhand einzelner Figuren im Detail näher beschrieben werden. Hierbei ist darauf hinzuweisen, dass die nachfolgend dargestellten Figuren lediglich schematisch zu verstehen sind. Einschränkungen hinsichtlich der Ausführbarkeit ergeben sich aus solchen schematischen Ausführungsformen nicht.

Technische Merkmale mit gleichen Bezugszeichen sollen sich nachfolgend dadurch auszeichnen, dass sie gleiche technische Funktionen bzw. gleiche technische Wirkungen aufweisen.

Die in den nachfolgenden Figuren dargestellten technischen Merkmale sollen für sich allein, wie auch in beliebiger Kombination mit anderen technischen Merkmalen beansprucht werden, soweit die sich daraus ergebende Kombination geeignet ist, die der Erfindung zugrundeliegenden technischen Aufgaben zu lösen.

Hierbei zeigen:
- FIG 1: eine erste Ausführungsform des erfindungsgemäßen thermischen Speichersystems 1 in schematischer Schaltansicht;
- FIG 2: eine weitere Ausführungsform des erfindungsgemäßen thermischen Speichersystems 1 gemäß einer schematischen Schaltansicht;
- FIG 3: eine flussdiagrammatische Darstellung einer Ausführungsform des erfindungsgemäßen Verfahrens.

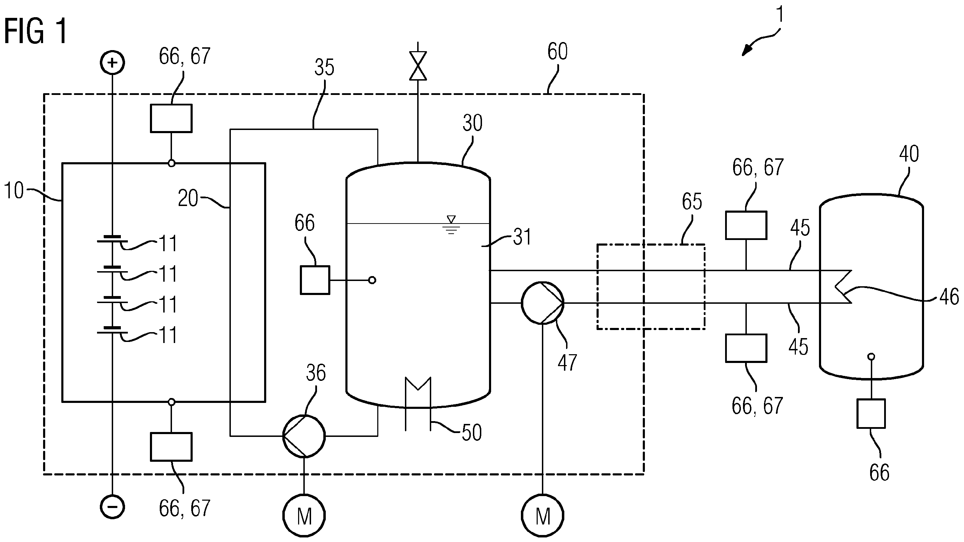

FIG 1 zeigt eine erste Ausführungsform eines erfindungsgemäßen thermischen Speichersystems 1, welches neben einer mehrere Speicherzellen 11 aufweisenden Hochtemperaturbatterie 10 einen Wärmespeicher 30 aufweist. Die Hochtemperaturbatterie 10 kann von außen, über nicht weiter mit Bezugszeichen versehene elektrische Kontakte (+,-) elektrisch verschaltet werden. Die von der Hochtemperaturbatterie 10 umfassten Speicherzellen 11 sind überwiegend seriell miteinander elektrisch verschaltet. Um den Betriebszustand der Hochtemperaturbatterie 10 geeignet zu erfassen sind an bzw. in der Hochtemperaturbatterie 10 geeignete Temperatursensoren 66 bzw. Drucksensoren 67 vorgesehen.

Damit die Hochtemperaturbatterie 10 mit Wärme versorgt werden kann bzw. von dieser Wärme abgeführt werden kann, ist ein Wärmefluidleitungssystem 35 umfasst, welches mit der Hochtemperaturbatterie 10 wärmetechnisch bzw. fluidtechnisch verschaltet ist. Das Wärmefluidleitungssystem 35 ist dazu geeignet, Wärme aus der die Speicherzellen 11 umgebenden Wärmetauscherflüssigkeit 20 auf ein Wärmespeicherfluid 31 zu übertragen. Ausführungsgemäß kann die Wärmetauscherflüssigkeit 20 mit dem Wärmespeicherfluid 31 identisch sein, muss es jedoch nicht sein. Das Wärmespeicherfluid 31 wird seinerseits in dem Wärmespeicher 30 bevorratet, wobei der Wärmespeicher 30 zur Wärmeabfuhr eine geeignete wärmetechnische Verschaltung mit einer Wärmeleitung 45 aufweist, die dazu ausgebildet ist, Wärme an einen Niedertemperaturwärmespeicher 40 zu übertragen. Alternativ hierzu könnte auch die wärmetechnische Verschaltung derart ausgeführt sein, dass die Wärmeleitung 45 einem externen Wärmetauscher (vorliegend nicht gezeigt) zugeführt ist, so dass etwa nicht weiter zu nutzende Energie der Umgebung zugeführt werden kann.

Hochtemperaturbatterie 10 sowie Wärmespeicher 30 und Wärmefluidleitungssystem 35 sind von einem Modul 60 umfasst. Das Modul 60 kann hierbei transportfähig sein, bzw. auch nicht. Um die Hochtemperaturbatterie 10 bei Betrieb geeignet mit Wärme zu versorgen, wird aus dem Wärmespeicher 30 Wärme entnommen und auf die die Speicherzellen 11 umgebende Wärmetauscherflüssigkeit 20 übertragen. Durch den Wärmekontakt zwischen Wärmetauscherflüssigkeit 20 und den Speicherzellen 11 kann so die Hochtemperaturbatterie 10 auf ein geeignetes Betriebstemperaturniveau gebracht werden. Sollte das Temperaturniveau des Wärmespeicherfluids 31 hierbei nicht ausreichend sein, ist in den Wärmespeicher 30 zudem eine elektrische Heizvorrichtung integriert, die elektrische Energie in thermische Energie umsetzt und auf das Wärmespeicherfluid 31 übertragen kann. Um stets über den Wärmeinhalt des in dem Wärmespeicher 30 befindlichen Wärmespeicherfluids 31 informiert zu sein, ist der Wärmespeicher 30 mit einem Temperatursensor 66 versehen. Um weiterhin die zwischen Wärmespeicher 30 und Hochtemperaturbatterie 10 ausgetauschte Wärmemenge geeignet einstellen zu können, umfasst das Wärmefluidleitungssystem 35 einen Strömungsgenerator 36, der die Strömungsgeschwindigkeit beeinflusst.

Ausführungsgemäß weist das Modul 60 einen Anschlussbereich 65 auf, welcher dazu ausgebildet ist, eine Wärmeleitung 45 zur wärmetechnischen Kopplung mit einem Niedertemperaturwärmespeicher 40 anzuschließen. Ebenso können von dem Modul 60 weitere elektrische bzw. elektronische Schnittstellen umfasst sein, welche vorliegend jedoch nicht gezeigt sind. Die Wärmeleitung 45 weist wiederum geeignete Temperatursensoren 66 bzw. Drucksensoren 67 auf, um die zwischen dem Wärmespeicher 30 und den Niedertemperaturwärmespeicher 40 ausgetauschte Wärmemenge geeignet bestimmen zu können. Die Wärmeleitung 45 weist zum Wärmeaustausch mit dem Niedertemperaturwärmespeicher 40 einen Wärmetauscher 46 auf, welcher erlaubt, auf der Seite des Niedertemperaturwärmespeichers 40 eine Temperaturkoppelung auszubilden.

Das in der Wärmeleitung 45 befindliche Wärmeleitungsmedium (vorliegend nicht mit Bezugszeichen versehen) kann hierbei bzw. muss nicht mit dem in dem Niedertemperaturwärmespeicher 40 befindlichen Niedertemperaturwärmespeichermedium identisch sein. Ausführungsgemäß ist es etwa möglich, dass das Wärmeleitungsmedium mit Wasser identisch ist, welches auch in dem Niedertemperaturwärmespeicher 40 bevorratet werden kann. In diesem Fall ist auch auf Seite des Wärmespeichers typischerweise ein Wärmetauscher vorzusehen, wobei die Wärmeleitung insgesamt druckfest ausgelegt ist. Der Vorteil einer solchen Anordnung wären z.B. Umweltgesichtspunkte, da im Falle eines Schadens an der Wärmeleitung keine schädigenden Substanzen in die Umgebung gelangen könnten. Alternativ kann jedoch auch in der Wärmeleitung 45 ein anderes Wärmeleitungsmedium vorliegen. Der Wärmeaustausch zwischen dem Wärmespeicher 30 und dem Niedertemperaturwärmespeicher 40 kann hierbei hinsichtlich der Wärmeaustauschrate geeignet eingestellt werden, indem etwa das in der Wärmeleitung 45 befindliche Wärmeleitungsmedium mit einer Strömung durch den Strömungsgenerator 47 beaufschlagt wird. Je nach Geschwindigkeit dieser Strömung kann mehr oder minder Wärme zwischen dem Wärmespeicher 30 und dem Niedertemperaturwärmespeicher 40 ausgetauscht werden.

Ausführungsgemäß ist es auch möglich, dass das in der Wärmeleitung 45 befindliche Wärmeleitungsmedium mit dem Wärmespeicherfluid 31 identisch ist. Insofern ist es etwa möglich, dass die Wärmeleitung 45 zu dem Wärmespeicher 30 hin offen ausgestaltet ist, so dass das Wärmespeicherfluid 31 in der Wärmeleitung 45 durch den Strömungsgenerator 47 umgepumpt wird. Die übertragene Wärmerate kann bspw. durch die verschiedenen Temperatur- bzw. Druckwerte bestimmt werden, welche durch die zahlreichen Temperatursensoren 66 bzw. Drucksensoren 67 aufgenommen werden.

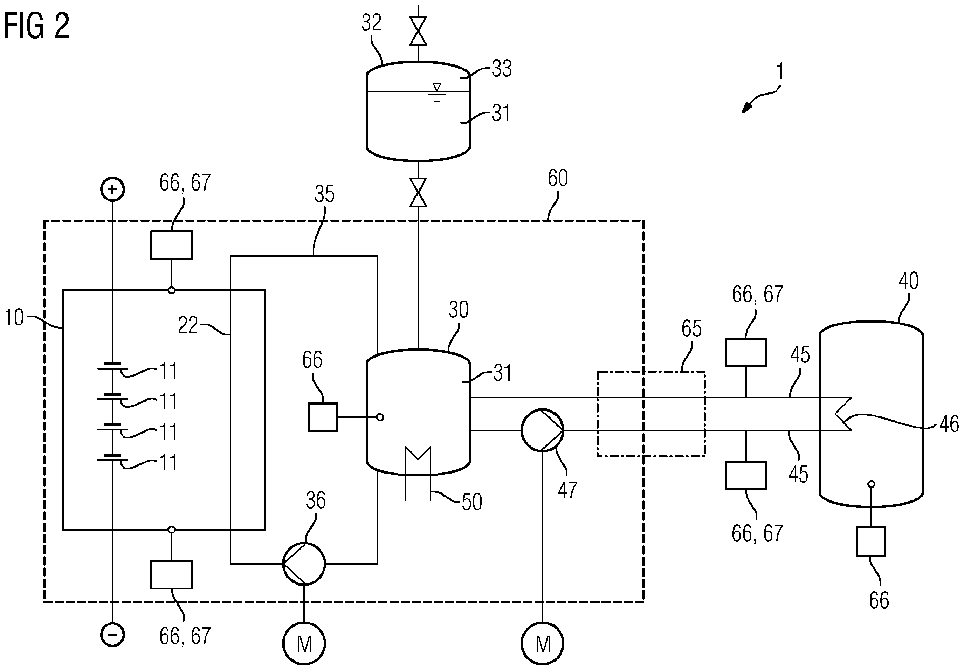

FIG 2 zeigt eine weitere Ausführungsform des erfindungsgemäßen thermischen Speichersystems 1, welche sich von dem in FIG 1 gezeigten thermischen Speichersystem 1 lediglich dahingehend unterscheidet, dass der Wärmespeicher 30 mit einem Ausgleichsgefäß 32 fluidtechnisch verschaltet ist. Ist gemäß der Ausführungsform nach FIG 1 der Wärmespeicher 30 aufgrund der nicht vollständigen Befüllung mit Wärmespeicherfluid 31 gleichzeitig auch Ausgleichsgefäß, so ist gemäß der Ausführungsform nach FIG 2, der Wärmespeicher 30 vollständig mit Wärmespeicherfluid 31 angefüllt. Bei Temperaturschwankungen während des Betriebs der Hochtemperaturbatterie 10 kommt es jedoch zu Volumenänderung des in dem Wärmespeicher 30 befindlichen Wärmespeicherfluids 31. Um diese Volumenänderungen auszugleichen, um etwa spannungsbedingte Beschädigungen an dem Wärmespeicher 30 zu vermeiden, ist dieser mit dem Ausgleichsgefäß 32 fluidtechnisch verschaltet. Hierbei umfasst das Ausgleichsgemäß 32 ebenfalls Wärmespeicherfluid 31, ist jedoch mit diesem nicht vollständig angefüllt, so dass ein Teil des Ausgleichsgefäßes etwa durch Luft 33 eingenommen wird. Bei entsprechender Volumenänderung des Wärmespeicherfluids 31 in dem Wärmespeicher 30 kann ein geeigneter Fluidaustausch zwischen Wärmespeicher 30 und Ausgleichsgefäß 32 erreicht werden. Bevorzugt befindet sich das im Ausgleichsgefäß 32 befindliche Wärmespeicherfluid 31 auf einem geringeren Temperaturniveau als das im Wärmespeicher 30 befindliche Wärmespeicherfluid 31. Demgemäß kann, wie oben bereits ausgeführt, ein unnötiger Wärmeverlust durch das Ausgleichsgefäß 32 oder unerwünschte chemische Reaktionen des Wärmespeicherfluids mit Sauerstoff vermieden werden. Das Ausgleichsgefäß 32 ist ausführungsgemäß vorliegend nicht von dem Modul 60 mit umfasst, kann jedoch gemäß einer anderen alternativen Ausführungsform von diesem mit umfasst sein.

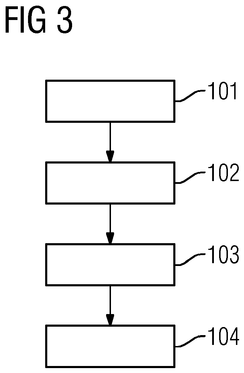

FIG 3 zeigt eine flussdiagrammatische Darstellung einer bevorzugten Ausführungsform des erfindungsgemäßen Verfahrens zum Betrieb eines thermischen Speichersystems 1, wie oben ausgeführt. Hierbei werden die folgenden Schritte umfasst:
- Betreiben der Hochtemperaturbatterie 10 unter Wärmeerzeugung (erster Verfahrensschritt 101);
- Übertragen wenigstens eines Teils dieser Wärme auf die Wärmetauscherflüssigkeit 20 (zweiter Verfahrensschritt 102);
- Speichern wenigstens eines Teils dieser Wärme mittels eines Wärmespeicherfluids 31 in einem Wärmespeicher 30 (dritter Verfahrensschritt 103);
- Übertragen wenigstens eines Teils dieser Wärme auf den Niedertemperaturwärmespeicher 40 (vierter Verfahrensschritt 104).

Die in den obigen Ausführungsformen dargestellte zweistufige Verschaltung zwischen Hochtemperaturbatterie 10 und Wärmespeicher 30 einerseits, sowie zwischen Wärmespeicher 30 und Niedertemperaturwärmespeicher 40 andererseits kann durch weitere nachfolgende bzw. weitere zwischengeschaltete Wärmestufen abgeändert sein. Erfindungswesentlich ist jedoch, dass in einer ersten Wärmestufe die Hochtemperaturbatterie 10 sowohl mit Wärme versorgt werden kann, als auch von dieser Wärme abgeführt werden kann. In einer zweiten nachfolgenden Wärmestufe kann dem Wärmespeicher 30 für eine geeignete Wärmenutzung Wärme entzogen und einem Niedertemperaturwärmespeicher 40 zugeführt werden. Die Zuführung der Wärme an den Niedertemperaturwärmespeicher 40 soll hierbei so erfolgen, dass die der Hochtemperaturbatterie 10 entnommene Wärmemenge gewährleistet, dass die Hochtemperaturbatterie 10 stets bei geeigneten Temperaturen betrieben werden kann. Dies betrifft insbesondere den Betrieb bei Wärmeabfuhr von der Hochtemperaturbatterie 10, wie sie etwa beim Entladen einer auf der Technologie der Natrium-Nickel-Chlorid-Zellen basierenden Technologie erfolgt. Je nach Größe und Betriebsweise der Hochtemperaturbatterie 10 können etwa 150 bis 250Wₜₕ je 1000Wₑₗ entladener elektrischer Leistung für die weiterführende Nutzung aus der Hochtemperaturbatterie 10 abgeführt werden.

Weitere Ausführungsformen ergeben sich aus den Unteransprüchen.

## Patentansprüche

1. Thermisches Speichersystem (1) umfassend eine Hochtemperaturbatterie (10) mit einer Mehrzahl an Speicherzellen (11), die eine Betriebstemperatur von wenigstens 100°C aufweisen, und die mit einer Wärmetauscherflüssigkeit (20) zur Wärmezuund -abfuhr in Kontakt sind, wobei weiterhin ein erster Wärmespeicher (30) mit einem Wärmespeicherfluid (31) umfasst ist, welcher mit der Hochtemperaturbatterie (10) derart wärmetechnisch verschaltet ist, dass Wärme von der Hochtemperaturbatterie (10) auf das Wärmespeicherfluid (31) übertragen werden kann, und wobei der Wärmespeicher (30) selbst mit einem Niedertemperaturwärmespeicher (40) wärmetechnisch zur Wärmeübertragung verschaltet ist, welcher zur Speicherung von Niedertemperaturwärme auf einem Temperaturniveau von wenigstens 40°C vorgesehen ist.

2. Thermisches Speichersystem gemäß Anspruch 1,
**dadurch gekennzeichnet, dass**
die Wärmetauscherflüssigkeit (20) in einem geschlossen Wärmefluidleitungssystem (35) bevorratet wird, welches in Bezug auf einen Fluidaustausch gegen die Umgebung abgeschlossen ist.

3. Thermisches Speichersystem gemäß einem der vorher gehenden Ansprüche,
**dadurch gekennzeichnet, dass**
die Wärmetauscherflüssigkeit (20) und das Wärmespeicherfluid (31) identisch sind und sich bevorzugt in einem Wärmefluidleitungssystem (35) befinden.

4. Thermisches Speichersystem gemäß einem der vorher gehenden Ansprüche,
**dadurch gekennzeichnet, dass**
der Wärmespeicher (30) eine elektrische Heizvorrichtung (50) aufweist, welche dazu ausgebildet ist, bei Betrieb Wärme auf das Wärmespeicherfluid (31) zu übertragen.

5. Thermisches Speichersystem gemäß einem der vorher gehenden Ansprüche,
**dadurch gekennzeichnet, dass**
der Wärmespeicher (30) ein Ausgleichsgefäß (32) aufweist, welches mit dem Wärmespeicher (30) fluidtechnisch verschaltet ist, und welches bei Betrieb der Hochtemperaturbatterie (10) Wärmespeicherfluid (31) auf einem geringeren Temperaturniveau umfasst als in dem Wärmespeicher (30) selbst.

6. Thermisches Speichersystem gemäß einem der vorher gehenden Ansprüche,
**dadurch gekennzeichnet, dass**
der Niedertemperaturwärmespeicher (40) als Wasserspeicher ausgebildet ist und die Niedertemperaturwärme in Wasser bevorratet wird.

7. Thermisches Speichersystem gemäß einem der vorher gehenden Ansprüche,
**dadurch gekennzeichnet, dass**
die Hochtemperaturbatterie (10) zusammen mit dem Wärmespeicher in einem transportfähigen Modul (60) untergebracht sind, welches einen geeigneten Anschlussbereich (65) zum Anschluss einer Wärmeleitung (45) für einen Niedertemperaturwärmespeicher (40) aufweist.

8. Verfahren zum Betrieb eines Thermischen Speichersystems (1) gemäß einem der vorher gehenden Ansprüche, umfassend die folgenden Schritte:
- Betreiben der Hochtemperaturbatterie (10) unter Wärmeerzeugung;
- Übertragen wenigstens eines Teils dieser Wärme auf die Wärmetauscherflüssigkeit (20);
- Speichern wenigstens eines Teils dieser Wärme mittels eines Wärmespeicherfluids (31) in einem Wärmespeicher (30) ;
- Übertragen wenigstens eines Teils dieser Wärme auf den Niedertemperaturwärmespeicher (40);

9. Verfahren gemäß Anspruch 8,
**dadurch gekennzeichnet, dass**
der Schritt des Übertragens wenigstens eines Teils dieser Wärme auf den Niedertemperaturwärmespeicher (40) in Abhängigkeit von dem Temperaturniveau in dem Wärmespeicher (30) erfolgt.

10. Verfahren gemäß einem der Ansprüche 8 oder 9,
**dadurch gekennzeichnet, dass**
der Schritt des Übertragens wenigstens eines Teils dieser Wärme auf den Niedertemperaturwärmespeicher (40) in Abhängigkeit von dem Temperaturniveau in der Hochtemperaturbatterie (10) erfolgt.

11. Verfahren gemäß einem der Ansprüche 8 bis 10,
**dadurch gekennzeichnet, dass**
der Schritt des Übertragens wenigstens eines Teils der Wärme der Hochtemperaturbatterie (1) auf die Wärmetauscherflüssigkeit (20) und/oder der Schritt des Übertragens wenigstens eines Teils der Wärme in dem Wärmespeicher (30) auf den Niedertemperaturwärmespeicher (40) derart geregelt bzw. gesteuert erfolgt, dass das Temperaturniveau der Wärmetauscherflüssigkeit (20) bei bestimmungsgemäßen Betrieb der Hochtemperaturbatterie (1) sich innerhalb eines Temperaturbandes mit einer Breite von höchstens 20°C, bevorzugt von höchstens 10°C befindet.

## Claims

1. Heat storage system (1) comprising a high-temperature battery (10) having a plurality of storage cells (11), which have an operating temperature of at least 100°C, and which are in contact with a heat exchanger liquid (20) for heat supply and dissipation, wherein furthermore a first heat store (30) having a heat store fluid (31) is comprised, which is thermally interconnected with the high-temperature battery (10) such that heat can be transferred from the high-temperature battery (10) to the heat store fluid (31), and wherein the heat store (30) is itself thermally interconnected with a low-temperature heat store (40) for heat transfer, which is provided for storing low-temperature heat at a temperature level of at least 40°C.

2. Heat storage system according to Claim 1,
**characterized in that** the heat exchanger liquid (20) is stockpiled in a closed heat fluid conduction system (35), which is sealed off against the surroundings with respect to a fluid exchange.

3. Heat storage system according to any one of the preceding claims,
**characterized in that** the heat exchanger liquid (20) and the heat store fluid (31) are identical and are preferably located in a heat fluid conduction system (35).

4. Heat storage system according to any one of the preceding claims,
**characterized in that** the heat store (30) has an electrical heating device (50), which is designed to transfer heat to the heat store fluid (31) during operation.

5. Heat storage system according to any one of the preceding claims,
**characterized in that** the heat store (30) has a compensation vessel (32), which is fluidically interconnected with the heat store (30), and which, during operation of the high-temperature battery (10), comprises heat store fluid (31) at a lower temperature level than in the heat store (30) itself.

6. Heat storage system according to any one of the preceding claims,
**characterized in that** the low-temperature heat store (40) is designed as a water store and the low-temperature heat is stockpiled in water.

7. Heat storage system according to any one of the preceding claims,
**characterized in that** the high-temperature battery (10) is housed together with the heat store in a transportable module (60), which has a suitable connection region (65) for connecting a heat line (45) for a low-temperature heat store (40).

8. Method for operating a heat storage system (1) according to any one of the preceding claims, comprising the following steps:
- operating the high-temperature battery (10) while generating heat;
- transferring at least a part of this heat to the heat exchanger liquid (20);
- storing at least a part of this heat by means of a heat store fluid (31) in a heat store (30);
- transferring at least a part of this heat to the low-temperature heat store (40).

9. Method according to Claim 8,
**characterized in that** the step of transferring at least a part of this heat to the low-temperature heat store (40) is performed as a function of the temperature level in the heat store (30).

10. Method according to any one of Claims 8 or 9, **characterized in that** the step of transferring at least a part of this heat to the low-temperature heat store (40) is performed as a function of the temperature level in the high-temperature battery (10).

11. Method according to any one of Claims 8 to 10, **characterized in that** the step of transferring at least a part of the heat of the high-temperature battery (1) to the heat exchanger liquid (20) and/or the step of transferring at least a part of the heat in the heat store (30) to the low-temperature heat store (40) is performed in a regulated and/or controlled manner such that the temperature level of the heat exchanger liquid (20) during proper operation of the high-temperature battery (1) is within a temperature range having a breadth of at most 20°C, preferably at most 10°C.

## Revendications

1. Système (1) d'accumulation thermique, comprenant une batterie (10) à haute température ayant une pluralité de cellules (11) d'accumulation, qui ont une température de fonctionnement d'au moins 100°C et qui sont en contact, pour l'apport et l'évacuation de chaleur, avec un liquide (20) d'échangeur de chaleur, dans lequel il y a en outre un premier accumulateur (30) de chaleur, ayant un fluide (31) d'accumulation de chaleur, qui est branché en technique de la chaleur avec la batterie (10) à haute température, de manière à ce que de la chaleur de la batterie (10) à haute température puisse être transmise au fluide (31) d'accumulation de la chaleur et dans lequel l'accumulateur (30) de chaleur soi-même est branché, en technique de chaleur pour la transmission de chaleur, avec un accumulateur (40) de chaleur à basse température, qui est prévu pour l'accumulation de chaleur à basse température jusqu'à un niveau de température d'au moins 40°C.

2. Système d'accumulation thermique suivant la revendication 1,
**caractérisé en ce que**
le liquide (20) d'échangeur de chaleur est mis en réserve dans un système (35) fermé de conduite de fluide de chaleur, qui est fermé, en ce qui concerne un échange de fluide, vis-à-vis de l'atmosphère ambiante.

3. Système d'accumulation thermique suivant l'une des revendications précédentes,
**caractérisé en ce que**
le liquide (20) d'échangeur de chaleur et le fluide (31) d'accumulation de la chaleur sont identiques et se trouvent de préférence dans un système (35) de conduite de fluide de chaleur.

4. Système d'accumulation thermique suivant l'une des revendications précédentes,
**caractérisé en ce que**
l'accumulateur (30) de chaleur a un dispositif (50) de chauffage électrique constitué pour transmettre en fonctionnement de la chaleur au fluide (31) d'accumulation de la chaleur.

5. Système d'accumulation thermique suivant l'une des revendications précédentes,
**caractérisé en ce que**
l'accumulateur (30) de chaleur a un ballon (32) de compensation, qui est branché en technique de fluide avec l'accumulateur (30) de chaleur et qui, lorsque la batterie (10) à haute température est en fonctionnement, comprend du fluide (31) d'accumulation de la chaleur à un niveau de température plus bas que dans l'accumulateur (30) de chaleur soi-même.

6. Système d'accumulation thermique suivant l'une des revendications précédentes,
**caractérisé en ce que**
l'accumulateur (40) de chaleur à basse température est constitué sous la forme d'un accumulateur d'eau et la chaleur à basse température est mise en réserve dans de l'eau.

7. Système d'accumulation thermique suivant l'une des revendications précédentes,
**caractérisé en ce que**
la batterie (10) à haute température est, ensemble avec l'accumulateur de chaleur, logée dans un module (60) transportable, qui a une partie (65) appropriée de raccordement, pour le raccordement d'un conduit (45) de chaleur, pour un accumulateur (40) de chaleur à basse température.

8. Procédé pour faire fonctionner un système (1) d'accumulation thermique suivant l'une des revendications précédentes, comprenant les stades suivantes :
- on fait fonctionner la batterie (10) à haute température avec production de chaleur ;
on transfère au moins une partie de cette chaleur au liquide (20) d'échangeur de chaleur ;
- on accumule au moins une partie de cette chaleur au moyen d'un fluide (31) d'accumulation de la chaleur dans un accumulateur (30) de chaleur ;
- on transfère au moins une partie de cette chaleur à l'accumulateur (40) de chaleur à basse température.

9. Procédé suivant la revendication 8,
**caractérisé en ce que**
le stade de transfert d'au moins une partie de cette chaleur à l'accumulateur (40) de chaleur à basse température s'effectue en fonction du niveau de la température dans l'accumulateur (30) de chaleur.

10. Procédé suivant l'une des revendications 8 ou 9, **caractérisé en ce que**
le stade de transfert d'au moins une partie de cette chaleur à l'accumulateur (40) de chaleur à basse température s'effectue en fonction du niveau de la température dans la batterie (10) à haute température.

11. Procédé suivant l'une des revendications 8 à 10, **caractérisé en ce que**
le stade de transfert d'au moins une partie de la chaleur de la batterie (10) à haute température au liquide (20) d'échangeur de chaleur et/ou le stade de transfert d'au moins une partie de la chaleur dans l'accumulateur (30) de chaleur à l'accumulateur (40) de chaleur à basse température s'effectue d'une façon régulée ou commandée, de manière à ce que le niveau de température du liquide (20) d'échangeur de chaleur se trouve, lorsque la batterie (10) à haute température est en fonctionnement suivant les prescriptions, dans une bande de température ayant une largeur d'au plus 20°C, de préférence d'au plus 10°C.
